# EUROPÄISCHE PATENTSCHRIFT

(11) **EP 3 663 602 B1**
(45) Veröffentlichungstag und Bekanntmachung des Hinweises auf die Patenterteilung: **21.02.2024**
(21) Anmeldenummer: 19214390.7
(22) Anmeldetag: 09.12.2019
(51) Int. Cl.: F16D 49/12, F16D 63/00, F16D 49/16, F16D 121/06, F15B 15/26, F16D 65/16

(54) **FESTSTELLEINRICHTUNG**
LOCKING DEVICE
DISPOSITIF DE BLOCAGE

(30) Priorität: 09.12.2018 DE 202018005634 U
(43) Veröffentlichungstag der Anmeldung: 10.06.2020
(73) Patentinhaber: Hoefler, Herbert, 9445 Rebstein (SG) (CH)
(72) Erfinder: Hoefler, Herbert, 9445 Rebstein (SG) (CH)
(74) Vertreter: Säger, Manfred

(56) Entgegenhaltungen:
- EP-A2- 1 785 633
- DE-A1- 3 810 388
- DE-T2- 69 105 009
- DE-T5-112014 005 547

## Beschreibung

Die Erfindung betrifft eine gattungsgemässe Feststelleinrichtung nach dem Oberbegriff des Hauptanspruchs.

Feststelleinrichtungen letztgenannter gattungsfremder Art sind in einer Vielzahl von Ausführungsformen bekannt (z.B. US 6,044,934, WO 00/74892 A2, DE 691 05 009 T2, DE 38 10 388 A1, DE 11 2014 005 547 T5).

Auch ist eine gattungsgemässe Feststelleinrichtung bekannt (EP 1 785 633 A2). Sie wird beispielsweise bei Linearbewegungseinheiten eingesetzt, die einen entlang mindestens einer Führungsstange mittels eines Antriebs verfahrbaren Schlitten aufweist, in welchem die Feststellvorrichtung gelagert ist (EP 0 452 702 A2). Allerdings ist bei der bekannten gattungsgemässen Feststelleinrichtung die Positionierung, d.h. die anvisierte Ziellage zu ungenau.

Der Erfindung liegt die Aufgabe zugrunde, eine gattungsgemässe Feststelleinrichtung so weiter zu bilden, dass damit eine genauere Positionierung möglich ist.

Diese Aufgabe wird bei einer gattungsgemässen Feststelleinrichtung nach dem Oberbegriff des Hauptanspruchs erfindungsgemäss durch dessen kennzeichnende Merkmale gelöst.

Nach Lehre der Erfindung ist das Klemmstück einstückig mit einer die Achse mit geringstem Spiel in seiner Freigabelage aufnehmenden Durchgangsbohrung sowie selbst biegeelastisch ausgebildet, so dass schon kleinste Bewegungen der Klemmarme aufeinander zu die feste reibungsschlüssige Anlage an der Oberfläche der Achse bewirken, und zwar nach kurzem Weg bei Schonung deren Oberfläche durch gleichmässige sowie flächige Einleitung der Klemmkräfte. Diese kurze Bewegung wird über die von dem Betätigungskolben auf die Klemmarme des Klemmstücks im Sinne einer Kraftverstärkung einwirkenden Übersetzung aus Widerlagerring, aus dem Steuerzapfen, aus den Stahlkugeln in dem Käfig und aus dem Steuerring erreicht, welche Kraftverstärkung ausreicht, im drucklosen Zustand des Fluids eine ausreichend grosse Kraft der Rückstellfeder auf das Klemmstück zum Erreichen der Klemmlage einwirken zu lassen. Dabei ist durch die zylinderförmige Ausbildung von dem Gehäuse und des Steuerzapfens die Verwendung von Stahlkugeln zur Kraftverstärkung sowie -übertragung bei gleichzeitig kompakter Bauweise möglich. Erst bei Beaufschlagung des Fluids mit Druck wird wieder die Freigabelage des Klemmstücks eingenommen.

Es sind auch Feststelleinrichtungen erhältlich (US 4,700,814), aber mit zwei einzelnen separat gelagerten Klemmarmen. Auch ist ein Klemmring bei einer gattungsfremden Feststelleinrichtung bekannt (DE 195 43 471 C1); allerdings ist bei dieser aber der Klemmring nicht direkt am Gehäuse festgelegt und im Übrigen umgekehrt wie bei der Erfindung angeordnet. Weiter ist im inneren des Klemmrings noch eine separate Klemmhülse vorgesehen, die selbst reibungsschlüssig an der Achse angreift, wodurch erst durch einige Teile derselben nach einer Art einer Übersetzung bzw. eines Getriebezuges das Feststellen bewirkt wird. In Abweichung zu der erfindungsgemässen Lehre wird die Kraft nicht durch eine Art Getriebezug mit Stahlkugeln und geneigten Steuerflächen, sondern durch einen Bauhöhe erfordernden, zweiarmigen Hebel auf das Klemmstück übertragen.

Die Kraftübertragung nach der erfindungsgemässen Lehre wird dabei mit Vorteil dadurch erreicht, dass die Steueraussenfläche des Betätigungskolbens einen im Duchmesser verkleinerten Rinnenbereich und einen sich daran in Richtung auf das Klemmstück anschliessenden Wulstbereich mit vergrössertem Durchmesser aufweist, dass aufgrund der Kraft der Rückstellfeder der Betätigungskolben in dessen erste Stellung gedrückt wird und dabei die Stahlkugeln im Wulstbereich der Steueraussenfläche des Steuerzapfens radial nach aussen gedrückt sind unter gleichzeitiger Bewegung des Steuerrings über dessen obere (in Richtung auf den Betätigungskolben gerichtetete sowie nichteben -ballig- geformte) Steuerinnenfläche entgegen der Kraft der Vorspannfeder in Richtung auf das Klemmstück zu und bei gleichzeitiger Abstützung an dem Widerlagerring 20, wobei die unteren (in Richtung von dem Betätigungskolben weg gerichtetete sowie nichteben -ballig- geformte) Steuerinnenflächen die Klemmflächen der Klemmarme aufeinander zu in die Klemmlage drücken, und dass bei Beaufschlagen mit Fluid der Betätigungskolben entgegen der Kraft der Rückstellfeder von seiner ersten in die zweite Stellung bewegt wird und dabei die Stahlkugeln radial nach innen im Rinnenbereich der Steueraussenfläche des Steuerzapfens gedrückt sind unter gleichzeitiger Bewegung des Steuerrings über dessen obere Steuerinnenfläche aufgrund sowie in Richtung der Kraft der Vorspannfeder von dem Klemmstück weg, wobei die unteren Steuerinnenflächen die Klemmflächen der Klemmarme voneinander weg in die Freigabelage drücken. Dabei berühren die Stahlkugeln in der ersten und der zweiten Stellung sowie allen Zwischenstellungen stets sowohl den Widerlagerring als auch den Steuerring.

Weitere zweckmässige Ausgestaltungen und Weiterbildungen der Erfindung sind in den Unteransprüchen gekennzeichnet.

Ein Ausführungsbeispiel der Erfindung wird nachfolgend unter Bezugnahme auf die Zeichnung näher erläutert. In dieser zeigt:
Figur 1 eine Feststelleinrichtung, in Klemmlage und im Längsschnitt;
Figur 2 die Feststelleinrichtung nach Figur 1 in Freigabelage und im Längsschnitt;
Figur 3 einen Schnitt III-III gemäss Figur 1;
Figur 4 einen Schnitt IV-IV gemäss Figur 2;
Figur 5 eine Einzelheit der Feststelleinrichtung, in dreidimensionaler Darstellung; und
Figuren 6 - 8 eine Einzelheit gemäss Figur 1 in verschiedenen Lagen.

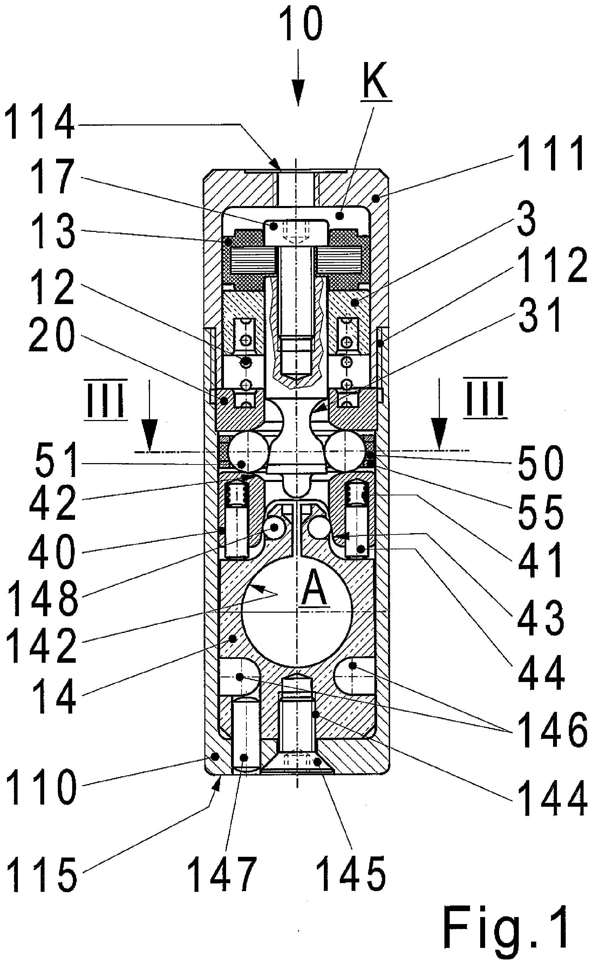

Die in Figur 1 dargestellte Feststelleinrichtung 10 dient zum Feststellen einer eine gegebene Achsrichtung sowie einen gegebenen Durchmesser aufweisenden Achse A, beispielsweise einer fest angeordneten Stange oder einer sich drehenden Welle und weist ein zweiteiliges Gehäuse 110,111 mit einem zylinderförmigen Teil 110 kleineren Durchmessers sowie ein daran über ein Gewinde 112 angeschraubtes zweites Gehäuseteil 111 auf, an dessen einer Seite ein Fluidanschluss 114 vorgesehenen ist.

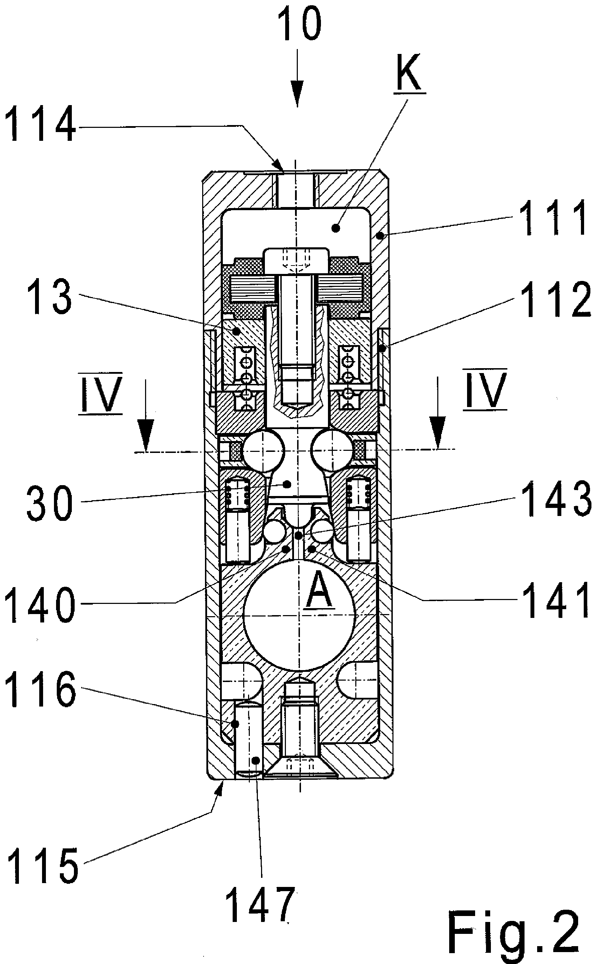

In diesem Gehäuseteil 111 ist durch Beaufschlagen von mit unter Druck stehendem Fluid über den Fluidanschluss 114 in den Kolbenraum K ein entgegen der Kraft einer Rückstellfeder 12 betätigbarer Betätigungskolben 13 vorgesehen, der auch mit einer magnetischen Abtasteinrichtung versehen sein kann und der an einem Ringteil 3 eine Aufnahmenut für das eine Ende der Rückstellfeder 12 aufweist. Dieser wirkt mit einem in dem Gehäuse an dessen anderer Seite angeordneten, an der Achse A angreifenden Klemmstück 14 zusammen, dessen zwei Klemmarme 140,141 von einer Freigabelage (Figur 2) in eine an der Achse A angreifenden Klemmlage (Figur 1) bewegbar sind. Die Angriffsflächen der Klemmarme können von einem dort in eine Tasche eingesetzten gehärteten Zylinderstift 148 gebildet sein, um den Verschleiss zu minimieren.

Das Klemmstück 14 selbst ist biegeelastisch (z.B. wegen des Werkstoffs Messing oder Bronze) sowie einteilig mit einer die Achse A mit geringem Spiel in seiner Freigabelage aufnehmenden Durchgangsbohrung 142 ausgebildet. Wenn parallel zur Achse A vorgesehene Ausnehmungen 146 vorgesehen werden, trägt auch die Form zu der Biegeelastizität bei. Die beiden Klemmarme 140,141 sind von einem bis in die Durchgangsbohrung 142 reichenden Spalt 143 getrennt, so dass das Klemmstück bei Bewegung der Klemmarme 140,141 aufeinander zu von der Freigabelage (Figur 2) in die Klemmlage (Figur 1) unter stetiger Verringerung des Spiels bis zur der reibungsschlüssigen Anlage an der Oberfläche der Achse A bei gleichzeitiger stetiger Verkleinerung des Spaltes 143 biegbar ist. Das Klemmstück 14 ist an dem an seiner, bezüglich des Fluidanschlusses 114 entgegengesetzten Seite des Gehäuses vorgesehenen Boden 115 angeordnet und dort mittels einer durch den Boden hindurchgeführten und in ein Gewindesackloch 144 des Klemmstücks 14 geschraubter Schraube 145 festgelegt.

Wegen des leichteren Zusammenbaus der Feststelleinrichtung 10 selbst sowie an der Achse A wird das Klemmstück 14 mittels eines an diesem festgelegten sowie in ein Sackloch 116 in dem Boden 115 des Gehäuses 110,111 ragenden exzentrisch angeordneten Stiftes 147 verdrehsicher festgelegt.

Zwischen dem Betätigungskolben 13 und dem Klemmstück 14 ist ein bezüglich der beiden Teile 110 und 111 des Gehäuses unbeweglich festgelegter Widerlagerring 20 vorgesehen, an dessen dem Fluidanschluss 114 zugewandten Seite sich die Rückstellfeder 12 abstützt.

Der Betätigungskolben 13 weist auf seiner dem Fluidanschluss 114 abgewandten Seite einen bis in den Bereich des Widerlagerrings 20 reichenden Steuerzapfen 30, der an mit einer rotationssymmetrischen, nach aussen gewandten Steueraussenfläche 31 auf und ist zwischen dem Widerlagerring 20 und dem Klemmstück 14 ein an der Innenseite des Gehäuses verschieblich geführter Steuerring 40 mit einer je eine nach innen weisenden klemmstückfernen oberen und klemmstücknahen unteren Steuerinnenfläche 42 bzw. 43 vorgesehen, welcher Steuerring 40 von der Kraft zumindest einer Vorspannfeder 41 von dem Klemmstück 14 weg beaufschlagt ist.

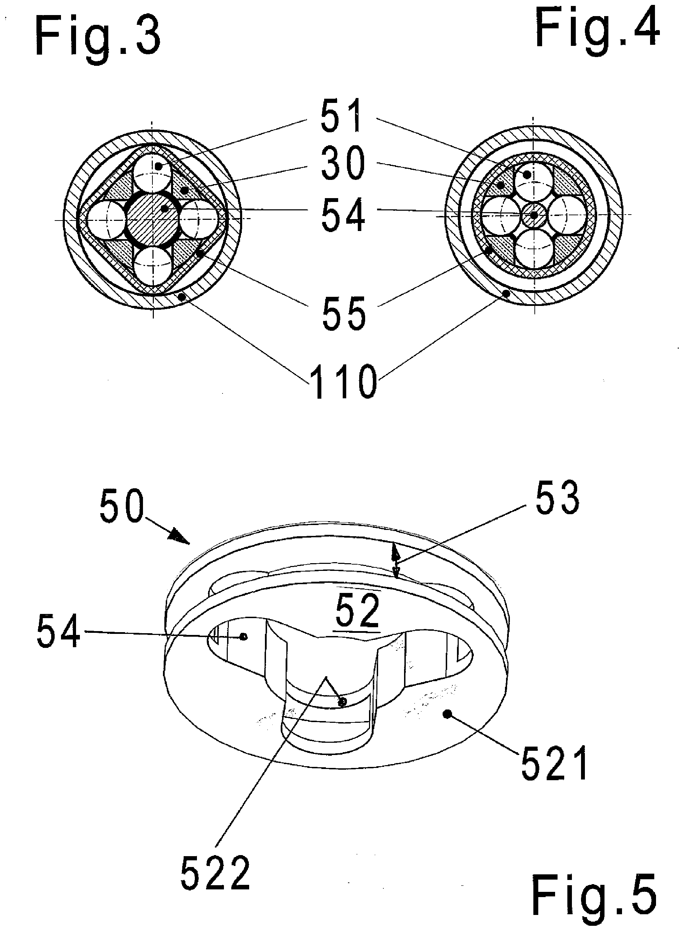

Weiterhin ist zwischen dem Widerlagerring 20 und dem Steuerring 40 ein Käfig 50 mit gleichmässig am Umfang verteilten Stahlkugeln 51 vorgesehen, die sich einerseits an dem Widerlagerring 20 und andererseits zugleich sowohl an der Steueraussenfläche 31 des Steuerzapfens 30 als auch an der Steuerinnenfläche 42 des Steuerrings 40 abstützen. Der Käfig ist in Figur 5 näher dargestellt und ist mit den gleichmässig am Umfang verteilten Stahlkugeln 51 als Scheibe 52 mit einer Ober- und einer Unterseite 521 bzw. 522 und mit einer an deren Mantel umlaufenden Rille 53 und strahlen- sowie rotationssymmetrischen Ausnehmungen 54 versehen, die sich von der Ober- bis zu der Unterseite 521,522 der Scheibe 50 erstrecken; sie können mit radialem Abstand vom äusseren Rand der Scheibe enden. In der Rille 53 ist ein elastisches Band 55 (Figur 3 und 4) angeordnet, das in der Freigabelage lose um den Käfig 50, wie in Figur 4 gezeigt und in der Feststellage gespannt ist (Figur 3) und die Stahlkugeln radial nach innen drückt.

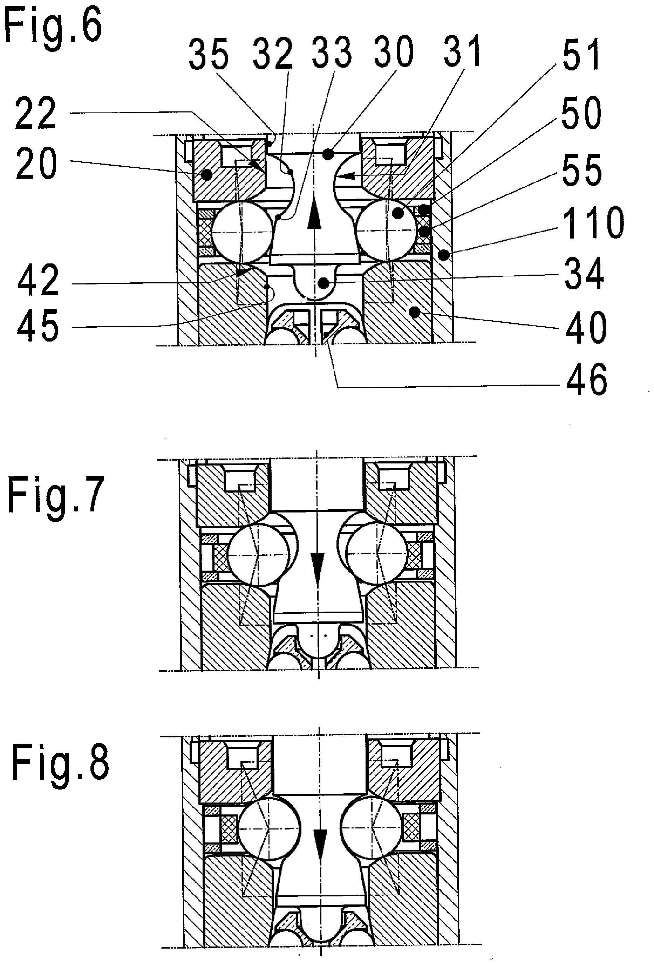

Wie diese kurze Bewegung des Betätigungskolbens 13 auf die Klemmarme 140,141 des Klemmstücks 14 im Sinne einer Kraftverstärkung über den Widerlagerring 20, den Steuerzapfen 30, die Stahlkugeln 51 in dem Käfig 50 und Steuerring 40 einwirkt und so erreicht wird, dass die Übersetzung bzw. Kraftverstärkung ausreicht, um im drucklosen Zustand des Fluids eine ausreichend grosse Kraft der Rückstellfeder 12 auf das Klemmstück 14 zum Erreichen der Klemmlage (Figur 1) einwirken zu lassen, wird anhand der Figur 6 erklärt: die Steueraussenfläche 31 des Betätigungszapfens 30 des Betätigungskolbens 13 weist einen im Duchmesser verkleinerten Rinnenbereich 32 und einen sich daran in Richtung auf das Klemmstück 14 anschliessenden Wulstbereich 33 mit vergrössertem Durchmesser auf. Aufgrund der Kraft der Rückstellfeder 12 wird der Betätigungskolben 13 in dessen erste Stellung (Figur 1 und Figur 6) und dabei die Stahlkugeln 51 im Wulstbereich 33 der Steueraussenfläche 31 des Steuerzapfens 30 radial nach aussen gedrückt, und zwar unter gleichzeitiger Bewegung des Steuerrings 40 über dessen obere - ballige- Steuerinnenfläche 42 entgegen der Kraft der Vorspannfeder 41 in Richtung auf das Klemmstück 14 zu, bei gleichzeitiger Abstützung an dem Widerlagerring 20, wobei die untere Steuerinnenfläche 43 die Klemmflächen der Klemmarme 14 aufeinander zu in die Klemmlage (Figur 1 und Figur 6) drückt. Bei Beaufschlagen mit Fluid wird der Betätigungskolben entgegen der Kraft der Rückstellfeder 12 von seiner ersten in die zweite Stellung bewegt und dabei (über Figur 7) die Stahlkugeln 51 radial nach innen in den Rinnenbereich 32 der Steueraussenfläche 31 des Steuerzapfens 30 gedrückt, und zwar unter gleichzeitiger Bewegung des Steuerrings 40 nach oben über dessen obere - ballige- Steuerinnenfläche 42 aufgrund sowie in Richtung der Kraft der Vorspannfeder 41 von dem Klemmstück 14 weg, wobei die Klemmflächen der Klemmarme 140,141 die unteren Steuerinnenflächen 43 nach oben in die Freigabelage der Feststelleinrichtung 10 (Figur 8) bewegen. In den Figuren 7 und 8 sind zur besseren Übersicht die Bezugszeichen zu den einzelnen Teilen weg gelassen.

Die Vorspannfeder 41 ist in ein zu dem Klemmstück 14 hin offenen Sackloch angeordnet und stützt sich einerseits an dem Absatz eines darin teilweise eingesetzten abgesetzten Zylinderstiftes 44, und der aus dem Sackloch heraus reichende Teil des Zylinderstiftes 44 sich andererseits an dem Klemmstück 14 ab.

Um ein zwangsweises Öffnen der Klemmarme 140,141 sicherzustellen, ist der Steuerzapfen 30 an seiner freien Vorderseite mit einem Spreizzapfen 34 (Figur 6) versehen, der in eine daran in seiner Form angepasste Spreizöffnung 46 am freien Ende der beiden Klemmarme 140,141 unter Vergrösserung deren Abstandes voneinander in die Freigabelage bei der Bewegung des Betätigungskolbens 13 in die zweite Stellung eingreift.

Zur einwandfreien Führung des Steuerzapfens 30 weist dieser zylinderförmige Mantelbereiche 35 auf, die bei der Bewegung zwischen der ersten und zweiten Stellung an dem ebenfalls zylinderförmigen Innenmantel 22 des Widerlagerrings 13 (Figur 6) und/oder des Innenmantels 45 des Steuerrings 40 und/oder des Ringteils 3 geführt sind.

## Patentansprüche

1. Feststelleinrichtung (10) zum Feststellen einer eine gegebene Achsrichtung sowie einen gegebenen Durchmesser aufweisenden Achse (A), beispielsweise einer fest angeordneten Stange oder einer sich drehenden Welle, mit einem Gehäuse (110,111), mit einem an dessen einer Seite vorgesehenen Fluidanschluss (114), mit einem durch Beaufschlagen mit Fluid entgegen der Kraft einer Rückstellfeder (12) aus einer ersten Stellung in eine zweite Stellung betätigbaren Betätigungskolben (13) und mit einem mit diesem zusammenwirkenden, in dem Gehäuse (110,111) auf dessen bezüglich des Fluidanschlusses (114) anderer Seite angeordneten Klemmstück (14) zum Umgreifen der Achse (A), dessen zwei Klemmarme (140,141) von einer Freigabelage in eine Klemmlage bezüglich der Achse (A) bewegbar sind,
wobei das Klemmstück (14) auf seiner vom Fluidanschluss (114) abgewandten Seite kraftschlüssig an dem Gehäuse (110,111) verdrehsicher festgelegt ist,
wobei das Klemmstück (14) biegeelastisch sowie einteilig mit einer Durchgangsbohrung (142) für die spielbehaftete Aufnahme der Achse (A) in seiner Freigabelage ausgebildet ist,
wobei die Klemmarme (140,141) von einem bis in die Durchgangsbohrung (142) reichenden Spalt (143) getrennt sind und an den an ihren beiden freien Enden voneinander weg gerichteten Außenseiten je eine Klemmfläche aufweisen,
wobei das Klemmstück (14) bei Bewegung der Klemmflächen der Klemmarme (140,141) aufeinander zu von der Freigabelage in die Klemmlage bei gleichzeitiger Verkleinerung des Spaltes (143) biegbar ausgebildet ist und
wobei zwischen dem Betätigungskolben (13) und dem Klemmstück (14) ein bezüglich des Gehäuses (110,111) unbeweglich festgelegter Widerlagerring (20) vorgesehen ist,
**dadurch gekennzeichnet,**
**dass** der Betätigungskolben (13) auf seiner vom Fluidanschluss (114) abgewandten Seite einen bis in den Bereich des Widerlagerrings (20) reichenden Steuerzapfen (30) mit einer rotationssymmetrischen Steueraußenfläche (31) aufweist,
**dass** zwischen dem Widerlagerring (20) und dem Klemmstück (14) ein an der Innenseite des Gehäuses (110,111) geführter Steuerring (40) mit einer nach innen weisenden klemmstückfernen oberen Steuerinnenfläche (42) und mit einer nach innen weisenden klemmstücknahen unteren Steuerinnenfläche vorgesehen ist, welcher Steuerring (40) von der Kraft zumindest einer Vorspannfeder (41) von dem Klemmstück (14) weg beaufschlagt ist, und
**dass** zwischen dem Widerlagerring (20) und dem Steuerring (40) ein Käfig (50) mit gleichmäßig am Umfang verteilten Stahlkugeln (51) vorgesehen ist, die sich einerseits an dem Widerlagerring (20) und andererseits zugleich sowohl an der Steueraußenfläche (31) des Steuerzapfens (30) als auch an der oberen Steuerinnenfläche (42) des Steuerrings (40) abstützen.

2. Feststelleinrichtung nach Anspruch 1, **dadurch gekennzeichnet, dass** die Steueraußenfläche (31) des Steuerzapfens (30) des Betätigungskolbens (13) einen im Durchmesser verkleinerten Rinnenbereich (32) und einen sich daran in Richtung auf das Klemmstück (14) anschließenden Wulstbereich (33) mit vergrößertem Durchmesser aufweist, dass aufgrund der Kraft der Rückstellfeder (12) der Betätigungskolben (13) in dessen erste Stellung gedrückt wird und dabei die Stahlkugeln (51) im Wulstbereich (33) der Steueraußenfläche (31) des Steuerzapfens (30) radial nach außen gedrückt sind unter gleichzeitiger Bewegung des Steuerrings (40) über dessen obere Steuerinnenfläche (42) entgegen der Kraft der Vorspannfeder (41) in Richtung auf das Klemmstück (14) zu, wobei die unteren Steuerinnenflächen (43) die Klemmflächen der Klemmarme (140,141) aufeinander zu in die Klemmlage drücken und dass bei Beaufschlagen mit Fluid der Betätigungskolben (13) entgegen der Kraft der Rückstellfeder (12) von seiner ersten Stellung in die zweite Stellung bewegt wird und dabei die Stahlkugeln (51) radial nach innen im Rinnenbereich (32) der Steueraußenfläche (31) des Steuerzapfens (30) gedrückt sind unter gleichzeitiger Bewegung des Steuerrings (40) über dessen obere Steuerinnenfläche (42) aufgrund sowie in Richtung der Kraft der Vorspannfeder (41) von dem Klemmstück (14) weg, wobei die unteren Steuerinnenflächen (43) voneinander weg in die Freigabelage bewegt werden und dabei die Klemmflächen der Klemmarme (140,141) freigeben.

3. Feststelleinrichtung nach Anspruch 1 oder 2, **dadurch gekennzeichnet, dass** sich die Rückstellfeder (12) für den Betätigungskolben (13) mit ihrer einen Seite an dem Widerlagerring (20) abstützt.

4. Feststelleinrichtung nach einem der vorhergehenden Ansprüche, **dadurch gekennzeichnet, dass** der Steuerzapfen (30) an seiner freien Vorderseite mit einem Spreizzapfen (34) versehen ist, der in eine daran in seiner Form angepasste Spreizöffnung (46) am freien Ende der beiden Klemmarme (140,141) unter Vergrößerung deren Abstandes voneinander in Richtung der Freigabelage bei der Bewegung des Betätigungskolbens (13) in die zweite Stellung eingreift.

5. Feststelleinrichtung nach einem der vorhergehenden Ansprüche, **dadurch gekennzeichnet, dass** die Vorspannfeder (41) in ein zu dem Klemmstück (14) hin offenen Sackloch angeordnet ist und sich am Absatz eines darin teilweise eingesetzten abgesetzten Zylinderstiftes (44) abstützt.

6. Feststelleinrichtung nach Anspruch 5, **dadurch gekennzeichnet, dass** der aus dem Sackloch heraus reichende Teil des Zylinderstiftes (44) sich an dem Klemmstück (14) abstützt.

7. Feststelleinrichtung nach einem der vorhergehenden Ansprüche, **dadurch gekennzeichnet, dass** der Steuerzapfen (30) zumindest einen zylinderförmigen Mantelbereich (35) aufweist, der bei der Bewegung zwischen der ersten Stellung und der zweiten Stellung an dem ebenfalls zylinderförmigen Innenmantel (22) des Widerlagerrings (20) und/oder an dem zylinderförmigen Innenmantel (45) des Steuerrings (40) und/oder an dem zylinderförmigen Innenmantel eines Ringteils (3) des Betätigungskolbens (13) geführt ist.

8. Feststelleinrichtung nach einem der vorhergehenden Ansprüche, **dadurch gekennzeichnet, dass** der Käfig (50) mit den gleichmäßig am Umfang verteilten Stahlkugeln (51) als Scheibe (52) mit einer umlaufenden Rille (53) und mit strahlen- sowie rotationssymmetrisch vorgesehenen, sich von der Oberseite (521) der Scheibe (52) bis zu der Unterseite (522) der Scheibe (52) erstreckenden Ausnehmungen (54) ausgebildet ist.

9. Feststelleinrichtung nach Anspruch 8, **dadurch gekennzeichnet, dass** in der Rille (53) ein elastisches Band (55) angeordnet ist.

## Claims

1. Locking device (10) for locking an axle (A) comprising a given axial direction and a given diameter, for example a fixed rod or a rotating shaft, with a housing (110,111), with a fluid connection (114) provided on one side thereof, with an actuating piston (13), which can be actuated from a first position into a second position by applying fluid against the force of a return spring (12), and with a clamping piece (14), which co-operates with the actuating piston (13) and is arranged in the housing (110,111) on its other side with respect to the fluid connection (114), for gripping around the axle (A), the two clamping arms (140,141) of the clamping piece (14) being movable from a release position into a clamping position with respect to the axle (A),
wherein the clamping piece (14) is force-locked to the housing (110,111) in a non-rotatable manner on its side facing away from the fluid connection (114),
wherein the clamping piece (14) is flexurally elastic and is formed in one piece with a through bore (142) for receiving the axle (A) with play in its release position,
wherein the clamping arms (140,141) are separated by a gap (143) extending into the through bore (142), each of the clamping arms (140,141) comprising a respective clamping surface on the outer sides directed away from each other at their two free ends,
wherein the clamping piece (14) is embodied to bend when the clamping surfaces of the clamping arms (140,141) move towards one another from the release position into the clamping position with simultaneous reduction of the gap (143), and
wherein between the actuating piston (13) and the clamping piece (14) an abutment ring (20) is provided which is immovably fixed with respect to the housing (110,111),
**characterized in**
**that** the actuating piston (13) comprises, on its side facing away from the fluid connection (114), a control pin (30) extending into the region of the abutment ring (20) and having a rotationally symmetrical control outer surface (31),
**that** a control ring (40) guided on the inside of the housing (110,111) is provided between the abutment ring (20) and the clamping piece (14) with an upper control inner surface (42) remote from the clamping piece pointing inwards, and with a lower control inner surface close to the clamping piece pointing inwards, which control ring (40) is acted upon by the force of at least one preload spring (41) away from the clamping piece (14), and
**that** a cage (50) is provided between the abutment ring (20) and the control ring (40) with steel balls (51) distributed evenly around the circumference, which are supported on the one hand on the abutment ring (20) and on the other hand simultaneously both on the control outer surface (31) of the control pin (30) and on the upper control inner surface (42) of the control ring (40).

2. Locking device according to claim 1, **characterized in that** the control outer surface (31) of the control pin (30) of the actuating piston (13) comprises a groove region (32) with a reduced diameter and a bead region (33) with an enlarged diameter adjoining it in the direction of the clamping piece (14), that due to the force of the return spring (12), the actuating piston (13) is pressed into its first position and thereby the steel balls (51) in the bead region (33) of the control outer surface (31) of the control pin (30) are pressed radially outwards, with simultaneous movement of the control ring (40) over its upper control inner surface (42) against the force of the preload spring (41) towards the clamping piece (14), wherein the lower control inner surfaces (43) press the clamping surfaces of the clamping arms (140,141) towards each other into the clamping position, and that, when fluid is applied, the actuating piston (13) is moved against the force of the return spring (12) from its first position into the second position and thereby the steel balls (51) are pressed radially inwards in the groove region (32) of the control outer surface (31) of the control pin (30) with simultaneous movement of the control ring (40) over its upper control inner surface (42) due to and in the direction of the force of the preload spring (41) away from the clamping piece (14), wherein the lower control inner surfaces (43) are moved away from each other into the release position, thereby releasing the clamping surfaces of the clamping arms (140,141).

3. Locking device according to claim 1 or 2, **characterized in that** one side of the return spring (12) for the actuating piston (13) is supported on the abutment ring (20).

4. Locking device according to one of the preceding claims, **characterized in that** the control pin (30) is provided on its free front side with an expansion pin (34) which engages in an expansion opening (46) adapted to it in its shape at the free end of the two clamping arms (140,141), increasing the distance between them in the direction of the release position during the movement of the actuating piston (13) into the second position.

5. Locking device according to one of the preceding claims, **characterized in that** the preload spring (41) is arranged in a blind hole open towards the clamping piece (14) and is supported on the shoulder of a stepped cylindrical pin (44) partially inserted therein.

6. Locking device according to claim 5, **characterized in that** the part of the cylindrical pin (44) extending out of the blind hole is supported on the clamping piece (14).

7. Locking device according to one of the preceding claims, **characterized in that** the control pin (30) comprises at least one cylindrical jacket region (35) which, during the movement between the first position and the second position, is guided on the likewise cylindrical inner jacket (22) of the abutment ring (20) and/or on the cylindrical inner jacket (45) of the control ring (40) and/or on the cylindrical inner jacket of a ring part (3) of the actuating piston (13).

8. Locking device according to one of the preceding claims, **characterized in that** the cage (50) with the steel balls (51) evenly distributed around the circumference is embodied as a disc (52) with a circumferential groove (53) and with recesses (54) provided in a beam-symmetrical and rotationally symmetrical manner and extending from the upper side (521) of the disc (52) to the lower side (522) of the disc (52).

9. Locking device according to claim 8, **characterized in that** an elastic band (55) is arranged in the groove (53).

## Revendications

1. Dispositif de blocage (10) pour bloquer un axe (A) présentant une direction axiale donnée ainsi qu'un diamètre donné, par exemple une tige disposée de manière fixe ou un arbre tournant, avec un boîtier (110,111), avec un raccord de fluide (114) prévu sur un côté de celui-ci, avec un piston d'actionnement (13) pouvant être actionné d'une première position à une deuxième position en l'alimentant en fluide à l'encontre de la force d'un ressort de rappel (12) et avec une pièce de serrage (14) coopérant avec celui-ci, disposée dans le boîtier (110,111) sur l'autre côté de celui-ci par rapport au raccord de fluide (114), pour enserrer l'axe (A), dont les deux bras de serrage (140,141) peuvent être déplacés d'une position de libération à une position de serrage par rapport à l'axe (A),
la pièce de serrage (14) étant fixée par adhérence sur le boîtier (110,111) sans possibilité de rotation sur son côté opposé au raccord de fluide (114),
la pièce de serrage (14) étant élastique en flexion et réalisée d'une seule pièce avec un perçage traversant (142) pour le logement avec jeu de l'axe (A) dans sa position de libération,
les bras de serrage (140,141) étant séparés par une fente (143) s'étendant jusque dans le perçage traversant (142) et présentant chacun une surface de serrage sur les côtés extérieurs orientés à l'opposé l'un de l'autre à leurs deux extrémités libres,
la pièce de serrage (14) étant réalisée de manière à pouvoir être pliée lors du mouvement des surfaces de serrage des bras de serrage (140,141) l'une vers l'autre de la position de libération à la position de serrage avec une réduction simultanée de la fente (143) et
une bague de butée (20) fixée de manière immobile par rapport au boîtier (110,111) étant prévue entre le piston d'actionnement (13) et la pièce de serrage (14),
**caractérisé en ce**
**que** le piston d'actionnement (13) présente, sur son côté opposé au raccord de fluide (114), un tourillon de commande (30) qui s'étend jusque dans la zone de la bague de butée (20), lequel tourillon de commande (30) présentant une surface extérieure de commande (31) à symétrie de révolution,
**qu'**il est prévu entre la bague de butée (20) et la pièce de serrage (14) une bague de commande (40) guidée sur le côté intérieur du boîtier (110,111) avec une surface intérieure de commande supérieure (42) éloignée de la pièce de serrage et dirigée vers l'intérieur et avec une surface intérieure de commande inférieure proche de la pièce de serrage et dirigée vers l'intérieur, laquelle bague de commande (40) étant sollicitée par la force d'au moins un ressort de précontrainte (41) en s'éloignant de la pièce de serrage (14), et
**qu'**il est prévu entre la bague de butée (20) et la bague de commande (40) une cage (50) avec des billes d'acier (51) réparties uniformément sur la périphérie, qui s'appuient d'une part sur la bague de butée (20) et d'autre part simultanément aussi bien sur la surface extérieure de commande (31) du tourillon de commande (30) que sur la surface intérieure de commande supérieure (42) de la bague de commande (40).

2. Dispositif de blocage selon la revendication 1, **caractérisé en ce que** la surface extérieure de commande (31) du tourillon de commande (30) du piston d'actionnement (13) présente une zone de gouttière (32) de diamètre réduit et une zone de bourrelet (33) de diamètre agrandi qui s'y raccorde en direction de la pièce de serrage (14), que, en raison de la force du ressort de rappel (12), le piston d'actionnement (13) est pressé dans sa première position et les billes d'acier (51) sont alors pressées radialement vers l'extérieur dans la zone de bourrelet (33) de la surface extérieure de commande (31) du tourillon de commande (30), avec un déplacement simultané de la bague de commande (40) sur sa surface intérieure de commande supérieure (42) à l'encontre de la force du ressort de précontrainte (41) en direction de la pièce de serrage (14), les surfaces intérieures de commande inférieures (43) poussant les surfaces de serrage des bras de serrage (140,141) l'une vers l'autre dans la position de serrage, et que, lors de l'alimentation en fluide, le piston d'actionnement (13) est déplacé à l'encontre de la force du ressort de rappel (12) de sa première position dans la deuxième position et les billes d'acier (51) sont alors pressées radialement vers l'intérieur dans la zone de gouttière (32) de la surface extérieure de commande (31) du tourillon de commande (30) avec un déplacement simultané de la bague de commande (40) sur sa surface intérieure de commande supérieure (42) en raison ainsi que dans la direction de la force du ressort de précontrainte (41) en s'éloignant de la pièce de serrage (14), les surfaces intérieures de commande inférieures (43) étant éloignées l'une de l'autre dans la position de libération et libérant ainsi les surfaces de serrage des bras de serrage (140,141).

3. Dispositif de blocage selon la revendication 1 ou 2, **caractérisé en ce que** le ressort de rappel (12) pour le piston d'actionnement (13) s'appuie par l'un de ses côtés sur la bague de butée (20).

4. Dispositif de blocage selon l'une des revendications précédentes, **caractérisé en ce que** le tourillon de commande (30) est pourvu, sur sa face avant libre, d'un tourillon d'écartement (34) qui s'engage dans une ouverture d'écartement (46), dont la forme est adaptée à celle-ci, à l'extrémité libre des deux bras de serrage (140,141), en augmentant la distance de ceux-ci l'un par rapport à l'autre en direction de la position de libération lors du déplacement du piston d'actionnement (13) dans la deuxième position.

5. Dispositif de blocage selon l'une des revendications précédentes, **caractérisé en ce que** le ressort de précontrainte (41) est disposé dans un trou borgne ouvert en direction de la pièce de serrage (14) et s'appuie sur le talon d'une goupille cylindrique (44) décalée, partiellement insérée dans ce trou borgne.

6. Dispositif de blocage selon la revendication 5, **caractérisé en ce que** la partie de la goupille cylindrique (44) qui sort du trou borgne s'appuie sur la pièce de serrage (14).

7. Dispositif de blocage selon l'une des revendications précédentes, **caractérisé en ce que** le tourillon de commande (30) présente au moins une zone d'enveloppe (35) de forme cylindrique qui, lors du mouvement entre la première position et la deuxième position, est guidée sur l'enveloppe intérieure (22) également de forme cylindrique de la bague de butée (20) et/ou sur l'enveloppe intérieure (45) de forme cylindrique de la bague de commande (40) et/ou sur l'enveloppe intérieure de forme cylindrique d'une partie annulaire (3) du piston d'actionnement (13).

8. Dispositif de blocage selon l'une des revendications précédentes, **caractérisé en ce que** la cage (50) avec les billes d'acier (51) réparties uniformément sur la périphérie est réalisée sous forme de disque (52) avec une rainure périphérique (53) et avec des évidements (54) prévus avec une symétrie de rayonnement et de rotation et s'étendant de la face supérieure (521) du disque (52) jusqu'à la face inférieure (522) du disque (52).

9. Dispositif de blocage selon la revendication 8, **caractérisé en ce qu'**une bande élastique (55) est disposée dans la rainure (53).
